# EUROPÄISCHE PATENTSCHRIFT

(11) **EP 3 476 012 B1**
(45) Veröffentlichungstag und Bekanntmachung des Hinweises auf die Patenterteilung: **13.05.2020**
(21) Anmeldenummer: 17791640.0
(22) Anmeldetag: 18.10.2017
(51) Int. Cl.: H01R 39/08, H02K 9/28, H02K 13/00

(54) **SCHLEIFRINGEINHEIT MIT LÜFTER-ISOLIERSEGMENT**
SLIP RING UNIT WITH FAN INSULATION SEGMENT
UNITÉ DE BAGUE COLLECTRICE COMPRENANT UN SEGMENT D'ISOLANT DE VENTILATEUR

(30) Priorität: 15.11.2016 EP 16198783
(43) Veröffentlichungstag der Anmeldung: 01.05.2019
(73) Patentinhaber: Siemens Aktiengesellschaft, 80333 München (DE)
(72) Erfinder: BINDER, Herbert, 94127 Neuburg (DE); MEMMINGER, Oliver, 94127 Neuburg a. Inn (DE); RASKOPF,Andrej, 94036 Passau (DE); SCHIFFERER, Klaus, 94152 Neuhaus am Inn (DE)
(86) Internationale Anmeldenummer: PCT/EP2017/076537
(87) Internationale Veröffentlichungsnummer: WO 2018/091215

(56) Entgegenhaltungen:
- EP-A1- 0 052 385
- DE-C- 504 351
- GB-A- 191 012 889

## Beschreibung

Die Erfindung betrifft eine Schleifringeinheit für eine elektrische Maschine, wobei die Schleifringeinheit zur Aufnahme eines Kohlebürstensystems vorgesehen ist und wobei die Schleifringeinheit mindestens ein Isoliersegment aufweist.

Die Erfindung betrifft weiter eine elektrische Maschine mit einer derartigen Schleifringeinheit.

Eine derartige Schleifringeinheit für eine elektrische Maschine kommt beispielsweise bei Windkraftanlagen zum Einsatz. Hier besteht der Bedarf, dass die elektrischen Maschinen in Form der Generatoren und ihrer Komponenten immer kompakter werden. Dies führt dazu, dass bei gleichbleibender Baugröße die Schleifringkomponenten immer höher belastet werden, da die Temperaturen, insbesondere von Schleifringen, Schleifringbürsten und Kohlebürstenhalter häufig stark ansteigen. Somit besteht ein Bedarf, sämtliche Komponenten der elektrischen Maschine, insbesondere auch die Schleifringeinheit möglichst effizient zu kühlen.

Aus der DE 504 351 C ist eine Anordnung zur Entfernung des Bürstenstaubes von den ungekapselten Schleifringen elektrischer Maschinen bekannt.

Die GB 12889 A.D. 1910 betrifft Verbesserungen im Zusammenhang mit der Kühlung von elektrischen Maschinen.

Die EP 2 961 009 A1 betrifft eine Schleifringanordnung, insbesondere für einen Windkraftgenerator, aufweisend zumindest einen Rotationskörper, welcher drehbar um eine Rotationsachse lagerbar ist, und zumindest zwei Schleifringe, welche jeweils an einer Mantelfläche des zumindest einen Rotationskörper angeordnet sind. Um die Kühlung von Schleifringanordnungen zu verbessern, wird vorgeschlagen, dass der Rotationskörper aus der Mantelfläche herausragende Vorsprünge (5) zur Erzeugung eines Kühlluftstroms aufweist.

Die DE 10 2009 048 265 A1 betrifft eine Schleifringanordnung für eine rotierende elektrische Maschine, welche Schleifringanordnung eine Mehrzahl von konzentrisch zur Maschinenachse und in axialer Richtung hintereinander angeordneter Schleifringe umfasst. Ein vereinfachender, Gewicht sparender und für eine besonders effektive Kühlung geeigneter Aufbau wird dadurch erreicht, dass die Schleifringanordnung selbsttragend ausgebildet ist.

Aus der DE 12 31 798 B ist ein direkt luftgekühlter Schleifring für eine elektrische Maschine, insbesondere einen Turbogenerator bekannt, bei dem zwischen zwei Schleifringen, auf denen Bürsten gleiten, ein doppelflutiger Schleifringradiallüfter angeordnet ist.

Die EP 2 961 009 A1 betrifft eine Schleifringanordnung, insbesondere für einen Windkraftgenerator, aufweisend zumindest einen Rotationskörper, welcher drehbar um eine Rotationsachse lagerbar ist, und zumindest zwei Schleifringe, welche jeweils an einer Mantelfläche des zumindest einen Rotationskörper angeordnet sind. Um die Kühlung von Schleifringanordnungen zu verbessern, wird vorgeschlagen, dass der zumindest eine Rotationskörper aus der Mantelfläche herausragende Vorsprünge zur Erzeugung eines Kühlluftstroms aufweist.

Die EP 0 052 385 A1 betrifft eine Schleifringanordnung von elektrischen Maschinen mit mehreren Schleifringen und mit axialen Kühlgasbohrungen.

Der Erfindung liegt die Aufgabe zu Grunde, eine Schleifringeinheit der eingangs genannten Art anzugeben, die auf einfache und kostengünstige Weise eine gleichmäßige Temperaturverteilung der Schleifringeinheit und somit eine möglichst effektive Kühlung der elektrischen Maschine ermöglicht.

Diese Aufgabe wird durch eine Schleifringeinheit mit den im Anspruch 1 angegebenen Merkmalen gelöst. Dadurch wird eine zuverlässige konstruktive Ausgestaltung geschaffen, die eine gute Mischung aus Aufwand und Nutzen beinhaltet.

Der Erfindung liegt die Erkenntnis zugrunde, dass sich die Schleifringoberfläche bei größeren Leistungen aus Kostengründen nicht vergrößern lässt, was dazu führt, dass sich der Schleifringkörper stärker erwärmt. Hierdurch würde ohne weitere Maßnahmen die Temperatur der einzelnen Komponenten einer Schleifringeinheit auf einen kritischen Wert ansteigen, und es könnten Schäden am Schleifring sowie an den Schleifringbürsten entstehen.

Die Erfindung löst auf überraschend einfache Weise dieses Temperaturproblem dadurch, dass mindestens ein Isoliersegment der Schleifringeinheit Ausprägungen zur Kühlung von Teilen der elektrischen Maschine aufweist. Somit wird mindestens ein ohnehin vorhandenes Isoliersegment zwischen den einzelnen Schleifringen der elektrischen Maschine derart gestaltet, dass es als Lüfter wirkt. Hierdurch können die Temperaturen der Schleifringeinheit sowie der gesamten elektrischen Maschine deutlich reduziert werden. Dies führt dazu, dass kleinere Baugrößen der Schleifringeinheit möglich werden und bei gleicher Baugröße somit auch höhere Leistungsstufen. Die Ausprägungen des Isoliersegments bzw. gegebenenfalls mehrere Isoliersegmente bilden idealerweise dabei einen Lüfter, der zur Verteilung eines Kühlluftstroms zu den zu kühlenden Teilen der elektrischen Maschine vorgesehen ist. Es ist sogar möglich, dass mit Hilfe derartig gestalteter Schleifringeinheiten auch Nachrüstungen von bereits bestehenden elektrischen Maschinen ermöglicht werden, die dann sogar idealerweise eine höhere Lebensdauer bzw. eine höhere Belastbarkeit gegenüber normalen Schleifringeinheiten aufweisen.

Eine gezielte Kühlung der Schleifringeinheit sowie einer in der Schleifringeinheit angeordneten Kohlebürsteneinheit wird auf einfach Weise dadurch erzielt, dass das die Ausprägungen aufweisende Isoliersegment einen Lüfter bildet, der zur Verteilung eines Kühlluftstroms zu den zu kühlenden Teilen der elektrischen Maschine vorgesehen ist.

Konstruktiv gelingt dies aufwandsarm dadurch, dass das die Ausprägungen aufweisende Isoliersegment als Lüfterrad aus dem Isoliersegment ausgeprägt ist.

Eine gezielte Kühlluftverteilung auch hin zu Komponenten einer Kohlebürsteneinheit wird dadurch sichergestellt, dass die Schleifringeinheit Bohrungen zur Durchführung von Kühlluft aufweist. Im Zusammenspiel der Ausprägungen des Isoliersegments und der Bohrungen seitlich an den Trägern der Schleifringe kommt es zu einer synergetischen Verteilung der Kühlluft der elektrischen Maschine. Hierzu sind die Bohrungen seitlich an den Trägern der Schleifringe und die Ausprägungen des Isoliersegments derart angeordnet, dass das aus den Ausprägungen des Isoliersegments gebildete Lüfterrad mit den Bohrungen der Schleifringe zusammenwirkt.

Vorteilhafte Ausgestaltungsformen sind in den Unteransprüchen enthalten.

Die Bohrungen sind vorteilhafter Weise zur gezielten Durchleitung von Kühlluft zu einer mit der Schleifringeinheit zusammenwirkenden Kohlebürsteneinheit vorgesehen.

Ein weiterer Effekt besteht darin, dass die Bohrungen zur Vergrößerung der Kühlfläche der Schleifringeinheit vorgesehen sind.

Im Folgenden wird die Erfindung anhand der in den Figuren dargestellten Ausführungsbeispiele näher beschrieben und erläutert.

Es zeigen:
- FIG 1: ein Ausführungsbeispiel einer doppelflutig gekühlten Schleifringeinheit mit jeweils außen liegenden Lüfter-Isoliersegmenten und
- FIG 2: eine Seitenansicht der in FIG 1 gezeigten Schleifringeinheit.

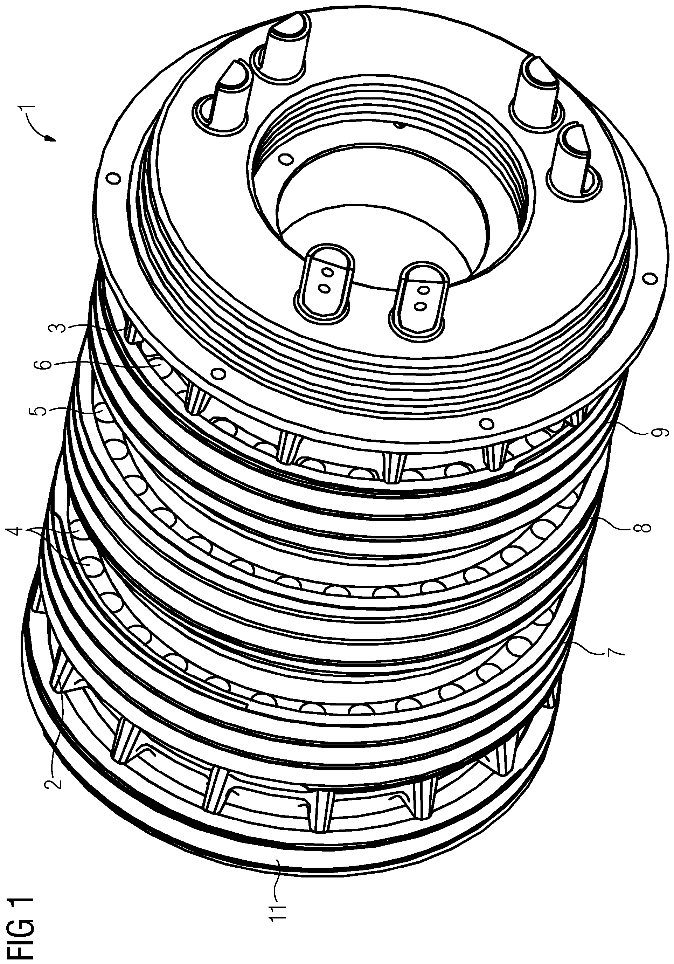

FIG 1 zeigt ein Ausführungsbeispiel einer doppelflutig gekühlten Schleifringeinheit 1 mit jeweils außenliegenden Lüfter-Isoliersegmenten 2,3. Der in FIG 1 dargestellt Schleifringkörper 1 besteht im Wesentlichen aus den Schleifringen 7,8,9, also aus einen dreiphasigen Schleifringsystem sowie einem Erdungsring 11. Zwischen den Schleifringen 7,8,9 sind Isoliersegmente 2,3 angeordnet. Die jeweils außenliegenden Isoliersegmente 2,3,10 des Schleifringkörpers 1 weisen Ausprägungen zur Kühlung von Teilen der elektrischen Maschine auf. Somit bilden die Isoliersegmente 2,3 jeweils eine Art Lüftereinheit, die zur Verteilung eines Kühlluftstromes zu den zu kühlenden Teilen der elektrischen Maschine vorgesehen sind. Hierdurch kann Frischluft aus der Umgebung gezielt zu einzelnen Komponenten der elektrischen Maschine gelenkt werden. Hierzu weist die Schleifringeinheit seitlich an den Trägern der Schleifringe 7,8,9 Schleifringbohrungen 4,5,6 auf. Diese Schleifringbohrungen 4,5,6 dienen der Durchführung, beispielsweise von Kühlluft zu einer mit der Schleifringeinheit zusammenwirkenden Kohlebürsteneinheit. Diese ist in FIG 1 aus Gründen der Übersichtlichkeit nicht näher dargestellt.

Der in FIG 1 dargestellte Schleifringkörper, der aus der Schleifringeinheit 1 gebildet wird, bildet somit eine doppelflutig gekühlte Schleifringeinheit 1, die in der Lage ist, durch Ausnutzung der Umgebungsluft des ohnehin vorhandenen Kühlkreislaufs der Schleifringeinheit 1 die direkt beanspruchten Komponenten wie Schleifringbürsten, Bürstenhalter und den Schleifringkörper selbst zu kühlen. Hierdurch werden die Temperaturen der elektrischen Maschine deutlich reduziert. Die dadurch niedrigere Temperatur erlaubt kleinere Baugrößen der Schleifringkörper bzw. der Schleifringeinheit 1. Die Schleifringeinheit 1 kann hierdurch mit mehr Bürsten pro Phase belastet werden, was ohne eine derartige Kühlung nicht möglich wäre. Somit sind höhere Leistungsstufen als bisher realisierbar. Zudem ist bei dieser Art von Kühlung eine Fremdbelüftung zur Erzeugung von Volumenstrom nicht weiter notwendig, denn der Volumenstrom wird durch den ohnehin vorhandenen Lüfter der Schleifringeinheit 1 und mit dem erfindungsgemäßen Schleifringkörper, der als doppelflutiges Kühlsystem durch die beiden im Schleifring integrierten Lüfter mit den entsprechend ausgeprägten Isoliersegmenten 2,3 gebildet wird, miterzeugt.

Zusätzliche Kosten entstehen bei einer derartigen Ausführung der Schleifringeinheit 1 nicht, da die Isoliersegmente 2,3 ohnehin systembedingt vorgesehen sind. Eine derartige Schleifringeinheit 1 kann auch bei der Nachrüstung von elektrischen Maschinen, beispielsweise insbesondere auch bei Windkraftanlagen erfolgen, da die Schleifringeinheit 1 entsprechend kompatibel zu bestehenden elektrischen Maschinen und Generatoren gestaltet werden kann. Dies führt zu einer Vermeidung von zusätzlichen Kosten auch für Lagerhaltung, Einkauf, etc..

Das Besondere der in FIG 1 dargestellten Schleifringeinheit 1 besteht insbesondere darin, dass die kühle Umgebungsluft präzise an die benötigten Stellen, also direkt an und durch den Schleifring geführt werden kann. Dies geschieht einerseits durch eine direkte Luftführung zu der Lauffläche, an der die Wärme entsteht. Durch eine entsprechende Gestaltung der Isoliersegmente 2,3 des Schleifringkörpers 1 entsteht somit ein doppelflutig belüfteter Schleifringkörper, der eine deutlich erhöhte Kühlfläche aufweist, wobei genau diese Fläche mit Kühlluft versorgt wird. Die Kühlluft wird mit den entsprechenden Isoliersegmenten 2,3, die als Lüfter ausgeprägt sind, durch den sich drehenden Schleifringkörper 1 aus den ohnehin vorhandenen Kühlluftstrom entnommen und direkt an die gefährdeten Bereiche gefördert. Die Luftführung kann dabei durch ein bestimmtes Luftleitsystem noch weiter unterstützt werden. Das Kühlsystem kann dabei noch unterstützt werden durch einen in der Schleifringeinheit 1 in der Regel standardmäßig vorgesehenen Radiallüfter, der in FIG 1 nicht näher dargestellt ist. Somit wird die erwärmte Kühlluft von dem Schleifringlüfter angesaugt und über den Luftstrom durch das Lüftergehäuse aus dem Schleifringraum in die Umgebung abgeführt. Hierdurch werden also direkt die Laufflächen der Schleifringeinheit gekühlt.

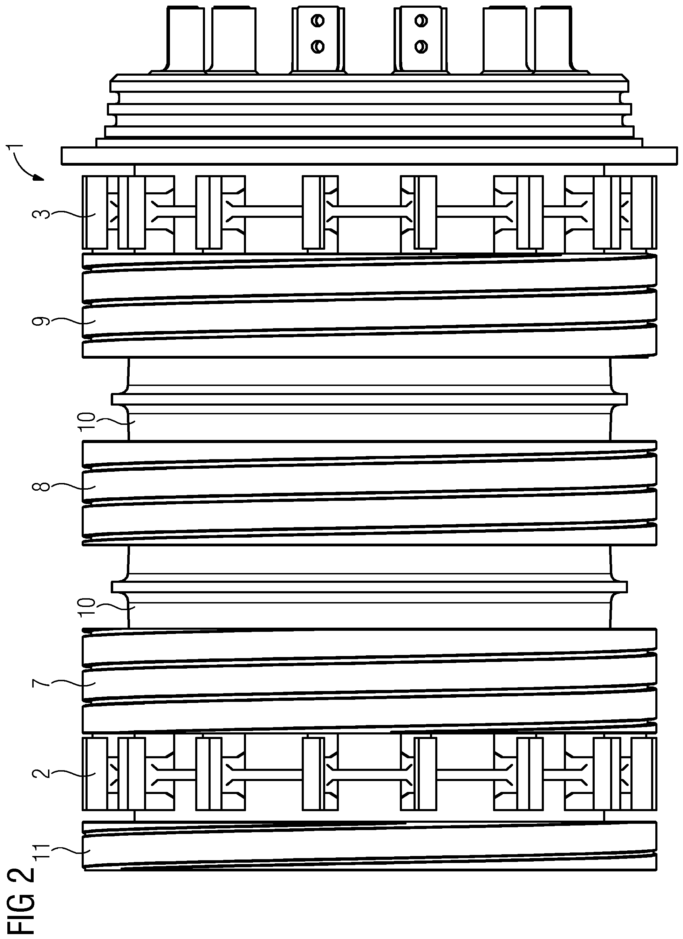

Die Schleifringlaufflächen und die Bürstentemperaturen bleiben durch diese Maßnahmen somit in einen betriebsgerechten Temperaturbereich und der Betrieb ist gegen Überhitzung geschützt. Damit können insgesamt wesentlich kleinere, günstigere Bauteile verwendet werden, und somit ein problemloser Betrieb der elektrischen Maschine sichergestellt. Neben einer Anwendung bei Generatoren, beispielsweise für Windkraftanlagen, kann die Erfindung auch bei Motoren zum Einsatz kommen. FIG 2 zeigt eine Seitenansicht der in FIG 1 gezeigten Schleifringeinheit 1. Zur Vermeidung von Wiederholungen wird bezüglich der Funktion sowie der Bezugszeichen auf die Ausführungen zu FIG 1 verwiesen.

## Patentansprüche

1. Schleifringeinheit (1) für eine elektrische Maschine, wobei die Schleifringeinheit (1) zur Aufnahme eines Kohlebürstensystems vorgesehen ist,
wobei die Schleifringeinheit (1) zwischen Schleifringen (7,8,9) der elektrischen Maschine mindestens ein Isoliersegment (2,3,10) aufweist,
wobei die Schleifringeinheit (1) seitlich an Trägern der Schleifringe (7,8,9) Bohrungen (4,5,6) zur Durchführung von Kühlluft aufweist,
**dadurch gekennzeichnet,**
**dass** mindestens die außen liegenden Isoliersegmente (2,3,10) derart gestaltet sind, dass sie als Lüfter wirken, wobei die als Lüfter wirkenden Isoliersegmente (2,3) Ausprägungen zur Kühlung von Teilen der elektrischen Maschine aufweisen, wobei die die Ausprägungen aufweisenden Isoliersegmente (2,3) als Lüfterrad aus dem Isoliersegment (2,3) ausgeprägt sind, wobei die die Ausprägungen aufweisenden Isoliersegmente (2,3) einen Lüfter bilden, der zur Verteilung eines Kühlluftstroms zu den zu kühlenden Teilen der elektrischen Maschine vorgesehen ist, und wobei die Schleifringeinheit (1) als doppelflutig gekühlte Schleifringeinheit (1) ausgebildet ist, bei der zumindest die außen liegenden Isoliersegmente (2,3) als Lüfter ausgeprägt sind.

2. Schleifringeinheit (1) nach Anspruch 1, wobei die Bohrungen (4,5,6) zur gezielten Durchleitung von Kühlluft zu mit einer mit der Schleifringeinheit (1) zusammenwirkenden Kohlebürsteneinheit vorgesehen sind.

3. Schleifringeinheit (1) nach einem der Ansprüche 1 oder 2, wobei die Bohrungen (4,5,6) seitlich an den Trägern der Schleifringe (7,8,9) und die Ausprägungen des Isoliersegments (2,3) derart angeordnet sind, dass das aus den Ausprägungen des Isoliersegments (2,3) gebildete Lüfterrad mit den Bohrungen (4,5,6) der Schleifringe (7,8,9) zusammenwirkt.

4. Schleifringeinheit (1) nach einem der Ansprüche 1 bis 3, wobei die Bohrungen (4,5,6) zur Vergrößerung der Kühlfläche der Schleifringeinheit (1) vorgesehen sind.

5. Elektrische Maschine mit einer Schleifringeinheit (1) nach einem der Ansprüche 1 bis 4.

6. Windkraftanlage mit einer elektrischen Maschine nach Anspruch 5.

## Claims

1. Slip ring unit (1) for an electrical machine, wherein the slip ring unit (1) is provided for accommodating a carbon brush system,
wherein the slip ring unit (1) has at least one insulating segment (2,3,10) between slip rings (7,8,9) of the electrical machine,
wherein the slip ring unit (1) has boreholes (4,5,6) on the sides of the supports of the slip rings (7,8,9) for feeding through cooling air,
**characterised in that**
at least the outer-lying insulating segments (2,3,10) are formed such that they act as fans, wherein the insulating segments (2,3) acting as fans have shaped sections for cooling parts of the electrical machine,
wherein the insulating segments (2,3) having the shaped sections are shaped from the insulating segment (2,3) as a fanwheel,
wherein the insulating segments (2,3) having the shaped sections form a fan, which is provided to distribute a cooling air flow to the parts of the electrical machine to be cooled, and wherein the slip ring unit (1) is configured as a slip ring unit (1) with twin-flow cooling, in which at least the outer-lying insulating segments (2,3) are shaped as fans.

2. Slip ring unit (1) according to claim 1, wherein the boreholes (4,5,6) are provided for conducting cooling air through to a carbon brush unit interacting with the slip ring unit (1) in a targeted manner.

3. Slip ring unit (1) according to one of claims 1 or 2, wherein the boreholes (4,5,6) are arranged on the side of the supports of the slip rings (7,8,9) and the shaped sections of the insulating segment (2,3) such that the fanwheel formed from the shaped sections of the insulating segment (2,3) interacts with the boreholes (4,5,6) of the slip rings (7,8,9).

4. Slip ring unit (1) according to one of claims 1 to 3, wherein the boreholes (4,5,6) are provided for enlarging the cooling surface of the slip ring unit (1).

5. Electrical machine having a slip ring unit (1) according to one of claims 1 to 4.

6. Wind turbine having an electrical machine according to claim 5.

## Revendications

1. Unité (1) de bague collectrice d'une machine électrique, l'unité (1) de bague collectrice étant prévue pour recevoir un système de balai en charbon,
dans laquelle l'unité (1) de bague collectrice a au moins un segment (2, 3, 10) isolant entre des bagues (7, 8, 9) collectrices de la machine électrique,
dans laquelle l'unité (1) de bague collectrice a, latéralement sur des supports des bagues (7, 8, 9) collectrices, des trous (4, 5, 6) de passage d'air de refroidissement,
**caractérisée**
**en ce qu'**au moins les segments (2, 3, 10) isolants se trouvant à l'extérieur sont conformés de manière à agir en tant que ventilateur, les segments (2, 3) isolants agissant en tant que ventilateur ayant des empreintes pour le refroidissement de parties de la machine électrique, les segments (2, 3) isolants ayant les empreintes sont imprimés sous la forme d'une roue de ventilateur dans le segment (2, 3) isolant, les segments (2, 3) isolants ayant les empreintes formant un ventilateur prévus pour répartir un courant d'air de refroidissement entre les parties à refroidir de la machine électrique et l'unité (1) de bague collectrice étant constituée sous la forme d'une unité (1) de bague collectrice refroidie par un double flux, dans laquelle les segments (2, 3) isolants se trouvant à l'extérieur sont imprimés en tant que ventilateur.

2. Unité (1) de bague collectrice suivant la revendication 1, dans laquelle les trous (4, 5, 6) sont prévus pour le passage ciblé d'air de refroidissement vers une unité de balai en charbon coopérant avec l'unité (1) de bague collectrice.

3. Unité (1) de bague collectrice suivant l'une des revendications 1 ou 2, dans laquelle les trous (4, 5, 6) sont disposés latéralement sur les supports des bagues (7, 8, 9) collectrices et les empreintes du segment (2, 3) isolant, de manière à ce que la roue de ventilateur formée des empreintes du segment (2, 3) isolant coopère avec les trous (4, 5, 6) de la bague (7, 8, 9) collectrice.

4. Unité (1) de bague collectrice suivant l'une des revendications 1 à 3, dans laquelle les trous (4, 5, 6) sont prévus pour agrandir la surface de refroidissement de l'unité (1) de bague collectrice.

5. Machine électrique ayant une unité (1) de bague collectrice suivant l'une des revendications 1 à 4.

6. Centrale éolienne ayant une machine électrique suivant la revendication 5.
